# EUROPÄISCHE PATENTANMELDUNG

(11) **EP 0 952 758 A2**
(43) Veröffentlichungstag der Anmeldung: **27.10.1999**
(21) Anmeldenummer: 99890129.2
(22) Anmeldetag: 19.04.1999
(51) Int. Cl.: H05B 33/08

(54) **Ansteuerung (Energieversorgung) von Elektrolumineszenzfolien**

(30) Priorität: 20.04.1998 AT 66198
(71) Anmelder: Kurz, Martin, Dipl.-Ing., 1235 Wien (AT); Eberharter, Thomas Dipl.Ing., A-1020 Wien (AT); Habel, Helmut, Dipl.-Ing., 1030 Wien (AT)
(72) Erfinder: Kurz, Martin, Dipl.-Ing., 1235 Wien (AT); Eberharter, Thomas Dipl.Ing., A-1020 Wien (AT); Habel, Helmut, Dipl.-Ing., 1030 Wien (AT)

(57) **Zusammenfassung**

Die Erfindung betrifft eine Schaltung zur Ansteuerung von Elektrolumineszenzfolien zur Erzielung einer möglichst hohen Helligkeit und Lebensdauer bei gleichzeitig einfacher Verkabelung. Um die Verkabelung, die beispielsweise in Gebäuden einen beträchtlichen Anteil der Systemkosten verursacht, kostengünstig ausführen zu können, muß ein ausreichender Personenschutz auf elektronischem Wege vorgesehen werden.

Dazu wird die Ansteuerspannung aus zwei zum Erdpotential im wesentlichen symmetrisch verlaufenden Spannungen zusammengesetzt und auf einen ungefährlichen Wert von beispielsweise kleiner als 50 V begrenzt. Die Spannung an der Folie kann dadurch im besten Fall verdoppelt werden. Die Symmetrierung kann beispielsweise mit einem Transformator mit Mittelanzapfung oder aber durch zwei unabhängige Endstufen die gegenphasig angesteuert werden erreicht werden. Zusätzlich kann der Transformator mit einer elektronischen Stabilisierung ergänzt werden um den Einfluß von Netzspannungsschwankungen und Lastschwankungen zu reduzieren. Eine weitere Verbesserung der Helligkeit kann durch die Verwendung einer Schaltung die die Ansteuerspannung mit Hilfe eines Oszillators mit Schaltverstärker und LC-Filter erzeugt erreicht werden, insbesondere wenn die Ansteuerspannung dreiecksförmig ist.

## Beschreibung

Die Erfindung betrifft eine Schaltung zur Energieversorgung von Elektrolumineszenzfolien (EL-Folien) mit im wesentlichen von der Last unabhängiger Ausgangsspannung zur Erzielung einer möglichst hohen Helligkeit und Lebensdauer bei gleichzeitiger einfacher Verkabelung.

Die derzeitigen Schaltungen zur Ansteuerung von EL-Folien kleinerer räumlicher Ausdehnung werden global als Inverter bezeichnet. Diese bilden im wesentlichen zusammen mit der Folie einen Resonanzkreise der zur Schwingungserzeugung genutzt wird. Die Versorgung des Inverters erfolgt durch eine kleine Gleichspannung. Diese Art der Ansteuerung muß allerdings für jede Applikation angepaßt werden. Mit Invertern lassen sich sehr preiswerte Ansteuerungen für verschiedene Helligkeitswünsche realisieren. Die Spannungsform ist annähernd sinusförmig und kann nicht geändert werden. Die Ansteuerspannung und die Ansteuerfrequenz hängt vom EL-Folientyp und von der Foliengröße ab. Auch die Alterung der EL-Folie beeinflußt diese Werte beträchtlich. Inverter sind nicht immer leerlauf- oder kurzschlußfest. Auch leistungsfähigere Ansteuerungen, die in weiten Bereichen unabhängig von der Foliengröße die Einstellung der Spannung, Kurvenform und Frequenz erlauben sind bekannt. Diese werden hauptsächlich bei größeren Leistungen eingesetzt. Sie bestehen im wesentlichen aus einem Oszillator mit analogem Leistungsverstärker und nachgeschaltetem Transformator. Eine in Bezug auf die Verlustleistung bessere Lösung besteht in der Verwendung eines Verstärkers mit Schaltstufen und anschließendem LC-Filter. Weiters besteht die Möglichkeit die EL-Folien direkt am Netz mit beispielsweise 50 Hz, 60 Hz oder 400 Hz zu betreiben.

Die Lichtstärke von Elektrolumineszenzfolien (EL-Folien) hängt von der Ansteuerspannung, der Ansteuerfrequenz und der Kurvenform der Ansteuerspannung ab. Insbesondere nimmt die Lichtstärke unterhalb einer für jeden EL-Folientyp typischen Schwellenspannung sehr stark ab. Das bedeutet, daß eine Erhöhung der Ansteuerfrequenz bei Verwendung von zu kleinen Ansteuerspannungen nicht zur gewünschten Verbesserung der Helligkeit führt. Es ist daher notwendig die Ansteuerspannung zumindest deutlich größer als die Schwellenspannung zu wählen. Als weiterer Parameter zur Erhöhung der Lichtstärke ist die Ansteuerfrequenz zu nennen. Als wesentlicher Nachteil ergibt sich dadurch eine deutlich sinkende Lebensdauer und ein steigender Betriebsstrom der EL-Folie.

Bei der Verwendung von EL-Folien in der Gebäudeinstallation oder Gebäudebeleuchtung, wie beispielsweise Mauerkantenbeleuchtung, Treppenkantenbeleuchtung, Handlaufbeleuchtung oder leuchtende Symbole verursacht die Verkabelung einen wesentlichen Anteil der gesamten Systemkosten. Die erwähnten Teile leuchten dabei durch die aufgebrachte EL-Folie aktiv und werden nicht durch eine Lichtquelle beleuchtet. Eine übliche Art der Verkabelung ist die Verwendung von doppelt isolierten Kabeln oder die Verdrahtung in eigens dafür vorgesehenen Elektroinstallationsrohren. Die Verkabelung ist, insbesondere wenn sie nachträglich erfolgt, sehr aufwendig und teuer. Nicht zuletzt müssen Metallteile die mit der EL-Folie in Berührung kommen ausreichend isoliert oder geerdet werden. Dies verursacht einen weiteren beträchtlichen Aufwand.

Für Systeme bei denen nur kleine Leuchtdichten benötigt werden sind Schaltungen im Einsatz, die durch die Verwendung von ausreichend kleinen Spannungen auf die doppelte Isolation sowie auf die Erdung von Metallteilen verzichten können.

Der gegenständlichen Erfindung liegt die Aufgabe zugrunde, eine Schaltung zur Energieversorgung von Elektrolumineszenzfolien (EL-Folien) mit im wesentlichen von der Last unabhängiger Ausgangsspannung zu schaffen, die es erlaubt die Leuchtdichte der EL-Folien zu erhöhen, ohne die Notwendigkeit alle Metallteile erden und die Kabel doppelt isoliert ausführen zu müssen.

Die Verwendung doppelt isolierter Kabel und die Erdung von Metallteilen dient dem Personenschutz. Ziel dieses Personenschutzes ist es eine Gefährdung von Personen bei einfachen Fehlern auszuschließen. Das heißt, daß der maximal mögliche Strom durch eine Person unter einem bestimmten, von der Frequenz und Zeit abhängigen, Wert bleiben muß. Die Lösung ist dadurch gekennzeichnet, daß die Ausgangsspannung zum Erdpotential im wesentlichen symmetriert ist, um die Ansteuerspannung der Folie zu erhöhen ohne den Personenschutz zu beeinträchtigen. Im optimalen Spezialfall der exakten Symmetrie kann die Spannung verdoppelt werden. Als weitere Möglichkeit die Lichtstärke bei konstantem Effektivwert der Ansteuerspannung zu erhöhen besteht darin die Kurvenform derart zu ändern, daß der Spitzenwert höher als bei einer Sinusspannung mit gleichem Effektivwert wird. Dies ist beispielsweise bei einer dreieckförmigen Ansteuerspannung der Fall. Auf Grund des-sen, daß EL-Folien im wesentlichen eine verlustbehaftete Kapazität darstellen ergibt sich durch eine dreieckförmige Ansteuerspannung als weiterer Vorteil ein annähernd rechteckförmiger Stromverlauf, wodurch der Effektivwert des Stromes kleiner wird.

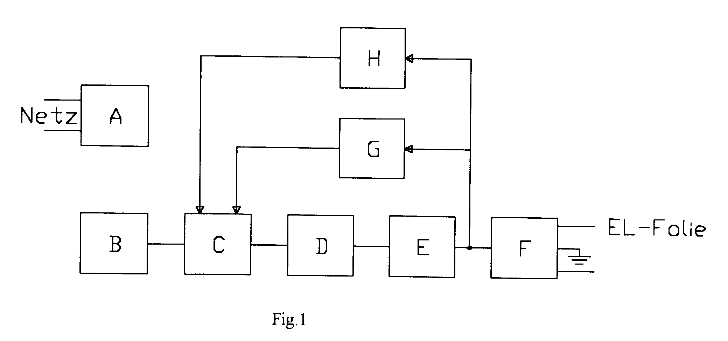

Fig. 1 zeigt eine vorteilhafte Ausgestaltung der Erfindung in Form eines Blockschaltbildes. Der Schaltungsblock (A) bestehend aus Netzfilter, Netzteil und einer Startschaltung. Er schützt die Schaltung vor Überspannungen, reduziert die Störaussendungen auf den Netzleitung auf ein laut EMV-Verordnung zulässiges Maß, erzeugt eine gleichgerichtete und kapazitiv gestützte Gleichspannung von ca. 300 V und beinhaltet eine Startvorrichtung für die Spannungsversorgung der Elektronik (12 V). Bei großem Energiebedarf muß entsprechend den Vorschriften im Block (A) auch eine Vorrichtung (=PFC) zur Verkleinerung der dem Netz entnommenen Stromoberwellen enthalten sein. Die Versorgung kann beispielsweise auch aus einem Gleichspannungs-Notstromnetz mit 220 VDC erfolgen. Der Oszillator (B) erzeugt eine konstante Wechselspannung vorzugsweise sinus- oder dreiecksförmig. Im Amplitudenstellglied (C), das im wesentlichen durch einen Transkonduktanzverstärker (OTA), dessen Transkonduktanz über einen Strom in einem weiten Bereich eingestellt werden kann, gebildet wird, wird die Oszillatorspannung geeignet abgeschwächt um die gewünschte Ausgangsspannung zu erreichen. Die Ausgangsspannung kann trotz eines einfachen Bauteilausfalls wegen der Verwendung von zwei Amplitudenreglern (G) und (H) mit einer geeigneten Verknüpfung der Stellgrößen unter einem vorgegebenen Wert gehalten werden. Die Maximalspannung wird auch dann nicht überschritten wenn das Dämpfungsglied am Eingang des OTA überbrückt wird. Der Leistungsverstärker (D) besteht aus einem Pulsbreitenmodulator PWM mit anschließender Schaltstufe und hat eine konstante Verstärkung. Um Überspannungen bei Versagen der Gegenkopplung zu verhindern muß sichergestellt werden, daß der Verstärker in diesem Fall abschaltet. Weiters wird zum Schutz der Schaltung bei Kurzschluß oder Überlast der Strom mit Hilfe eines Widerstandes detektiert und auf einen bestimmten Wert begrenzt. Das Leistungs-PWM Signal wird dann im Filterblock (E) gefiltert um die Schaltfrequenz auf zulässige Werte zu reduzieren. Die Filterdrossel ist als Transformator (für die Schaltfrequenz) mit Luftspalt ausgeführt um die Spannungsversorgung der Elektronik sicherzustellen. Falls im Netzteil (A) kein Schaltnetzteil oder Transformator verwendet wird kann dadurch der Wirkungsgrad der Schaltung erhöht werden. Der Ausgangsblock (F) besteht aus einem Transformator mit sekundärer Mittelanzapfung sowie einem Filterkondensator. Der Ausgangstransformator (F) mit sekundärer Mittelanzapfung symmetriert die gefilterte Ansteuerspannung bezüglich dem Erdpotential. Gleichzeitig stellt er sicher, daß bei Schaltungsversagen der Endstufe keine Gleichspannung am Ausgang anliegen kann. Der Transformator (F) wird so dimensioniert, daß die Elektronik bei einer gegebenen Versorgungsspannung eine möglichst günstige Ausgangsspannung liefern kann. Die geeignet dimensionierte Streuinduktivität des Transformators wird in Kombination mit einem weiteren Filterkondensator als zweite Filterstufe zur weiteren Reduktion der Schaltspannung verwendet. Die Spannungsregler (G) und (H) die die Ausgangsspannung mit Hilfe eines Vollwellengleichrichters messen, mit je einer Referenzspannung vergleichen und das Fehlersignal aufintegrieren sind ebenfalls doppelt ausgeführt um sicherzustellen, daß bei einfachen Bauteilfehlern die Ausgangsspannung nicht unzulässig erhöht wird. Im Amplitudenstellglied (C) werden die beiden Ausgangssignale der Spannungsregler (G) und (H) so verknüpft, daß das kleinere Signal zur Amplitudeneinstellung verwendet wird. Aus schaltungstechnischen Gründen werden in den Spannungsreglern (G) und (H) die Gleichrichtwerte und nicht die Effektivwerte gemessen. Es muß sichergestellt sein daß die Kurvenform der Ansteuerspannung auch im Fehlerfall kein kleineres Verhältnis zwischen Gleichricht- und Effektivwert besitzt als das im Normalbetrieb verwendete Signal. Falls dies nicht garantiert werden kann muß entweder gleichzeitig mit dem Gleichrichtwert der Spitzenwert überwacht werden, oder es muß eine Effektivwertmessung eingesetzt werden. Falls die Schaltung für große Flächen ausgelegt werden soll kann es günstiger sein den Transformator (F) durch einen zweiten Leistungsverstärker, der gegenphasig zum ersten Leistungsverstärker (D) angesteuert wird, und dazugehörendem Filer (E) zu ersetzen. Auch hier ist wieder auf die Überwachung der Maximalspannung bei einem Bauteilausfall zu achten.

## Patentansprüche

1. Schaltung zur Energieversorgung von Elektrolumineszenzfolien (EL-Folien) mit im wesentlichen von der Last unabhängiger Ausgangsspannung, **dadurch gekennzeichnet ,** daß die Ausgangsspannung zum Erdpotential im wesentlichen symmetriert ist, um die Ansteuerspannung der Folie zu erhöhen ohne den Personenschutz zu beeinträchtigen.

2. Schaltung nach Anspruch 1, **dadurch gekennzeichnet ,** daß die Symmetrierung mit Hilfe eines Transformators (F) mit Mittelanzapfung erreicht wird.

3. Schaltung nach Anspruch 1, **dadurch gekennzeichnet ,** daß die Symmetrierung im wesentlichen durch zwei gegenphasig angesteuerte Endstufen (Verstärker) erreicht wird.

4. Schaltung nach Anspruch 1 oder 2, **dadurch gekennzeichnet ,** daß zur Verbesserung der Spannungsstabilität ein Regler in Form eines kombinierten Längs- und Querreglers vorgesehen ist.

5. Schaltung nach Anspruch 1 oder 2, **dadurch gekennzeichnet ,** daß zur Anspeisung des Transformators (F) ein Oszillator (B) mit nachgeschaltetem Verstärker (D) vorgesehen ist.

6. Schaltung nach einem der Ansprüche 1 bis 5, **dadurch gekennzeichnet ,** daß die Schaltung mindestens zwei unabhängige Schaltungsteile (G, H) zur Spannungsbegrenzung besitzt.

7. Schaltung nach einem der Ansprüche 1 bis 6,**dadurch gekennzeichnet ,** daß die Schaltung eine Spannungsform, vorzugsweise dreieckförmig, erzeugt, bei der das Verhältnis zwischen Spitzenspannung und Effektivspannung größer als bei einer sinusförmigen Spannung ist.
